# EUROPÄISCHE PATENTSCHRIFT

(11) **EP 1 016 812 B1**
(45) Veröffentlichungstag und Bekanntmachung des Hinweises auf die Patenterteilung: **25.08.2004**
(21) Anmeldenummer: 99811140.5
(22) Anmeldetag: 13.12.1999
(51) Int. Cl.: F16K 17/04

(54) **Federbelastetes Sicherheitsventil**
Spring loaded safety valve
Soupape de sécurité actionnée par ressort

(30) Priorität: 29.12.1998 DE 19860578
(43) Veröffentlichungstag der Anmeldung: 05.07.2000
(73) Patentinhaber: ABB Schweiz AG, 5400 Baden (CH)
(72) Erfinder: Abrell, Monika, 8052 Zürich (CH); Hunger, Olaf, 8200 Schaffhausen (CH); Peter, Jörg, 8340 Hinwil (CH); Zehnder, Lukas, Dr., 5405 Baden-Dättwil (CH); Dähler, Christian, Greensburg, PA 15601 (US)
(74) Vertreter: ABB Patent Attorneys

(56) Entgegenhaltungen:
- US-A- 2 973 777
- US-A- 4 201 242
- PROF. DR.-ING. SIEGFRIED HILDEBRAND: "Feinmechanische Bauelemente" 1980 , VEB VERLAG TECHNIK, 4. AUFLAGE , BERLIN XP002185220 * Seite 677 - Seite 679 *
- PATENT ABSTRACTS OF JAPAN vol. 1996, no. 09, 30. September 1996 (1996-09-30) -& JP 08 121626 A (TOSHIBA CORP), 17. Mai 1996 (1996-05-17)

## Beschreibung

### TECHNISCHES GEBIET

Bei der Erfindung wird ausgegangen von einem federbelasteten Sicherheitsventil nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus dem Lehrbuch von Prof. Dr.-Ing. Siegfried Hildebrand: "Feinmechanische Bauelemente", VEB Verlag Technik Berlin, 4. Auflage, 1980, S. 677 - 679, bekannt ist. Dort sind Fliehbremskraftregeler mit hebelgelagerten Fliehgewichten beschrieben, bei denen die Fliehkraft gegen die Rückstellkraft einer axial zur Hubachse angeordneten Druckfeder wirkt. Die Wirksamkeit des Reglers beginnt ab einer Grenzdrehzahl, bei der sich die Bremsflächen gerade berühren. Die Federkraft nimmt mit zunehmendem Hub zu.

Für ein selbständig rückstellendes Sicherheitsventil ist einerseits ein schnelles, andererseits ein weites Öffnen nötig, auch wenn die Ventilöffnungskraft nach Erreichen einer Auslösekraft über den Hub des Ventils nicht wesentlich ansteigt oder sogar abfällt.

Aus der Patentschrift US 4,201,242 ist ein federbelastetes und selbst rückstellendes Druckentlastungsventil bekannt, welches entlang einer Ventilachse beweglichen Ventilschließkörper aufweist, welcher mit einem Ventilschließkörpergelenk versehen ist. In dem Ventilschließkörpergelenk ist ein Hebel drehbar gelagert, welcher über ein Gestänge mit angelenkten Hebeln den Ventilschließkörper in axialer Richtung abstützt. Eine seitliche Abstützung ist nicht vorgesehen.

Aus der Patentschrift US 2,973,777 ist ein weiteres federbelastetes Druckentlastungsventil bekannt, welches ähnlich aufgebaut ist, wie das zuvor erwähnte.

### DARSTELLUNG DER ERFINDUNG

Die Erfindung, wie sie im Patentanspruch 1 definiert ist, löst die Aufgabe, ein federbelastetes Sicherheitsventil der eingangs genannten Art derart weiterzuentwickeln, daß ein weites Öffnen des Ventils nach einem Erreichen einer vorgebbaren Ventilöffnungskraft auch dann gewährleistet ist, wenn diese danach nicht ansteigt.

Vorteilhafte Ausgestaltungen der Erfindung sind in den abhängigen Patentansprüchen definiert.

Ein Vorteil der Erfindung besteht darin, daß das federbelastete Sicherheitsventil schnell und sicher öffnet, sobald ein Druck auf das Ventil einen vorgebbaren Vorspannkraftgrenzwert erreicht.

Ein weites Öffnen kann durch einen Federstapel mit flacher Federkennlinie und großem Hub erreicht werden. Schnelles Öffnen erfordert eine geringe Masse der bewegten Teile. Erfindungsgemäß können beide Forderungen gleichzeitig erfüllt werden, was mit einem direkt wirkenden Federpaket, z. B. mit einer Teller- oder Druckfeder, nicht möglich ist.

### KURZE BESCHREIBUNG DER ZEICHNUNGEN

Die Erfindung wird nachstehend anhand von Ausführungsbeispielen erläutert. Es zeigen:
- Fig. 1: ein Prinzipschema eines federbelasteten Sicherheitsventils mit alternativen Varianten,
- Fig. 2: eine Kennlinie der Öffnungskraft eines federbelasteten Sicherheitsventils in Abhängigkeit von einem Ventilhub,
- Fig. 3: ein federbelastetes Sicherheitsventil mit einer gemeinsamen Wand-Hebelanlenkstelle in einer axialsymmetrischen Ausführung im Querschnitt und
- Fig. 4: ein federbelastetes Sicherheitsventil mit unterschiedlichen Hebelanlenkstellen in einer axialsymmetrischen Ausführung im Querschnitt.

### WEGE ZUR AUSFÜHRUNG DER ERFINDUNG

In den Figuren sind gleiche Teile mit gleichen Bezugszeichen gekennzeichnet.

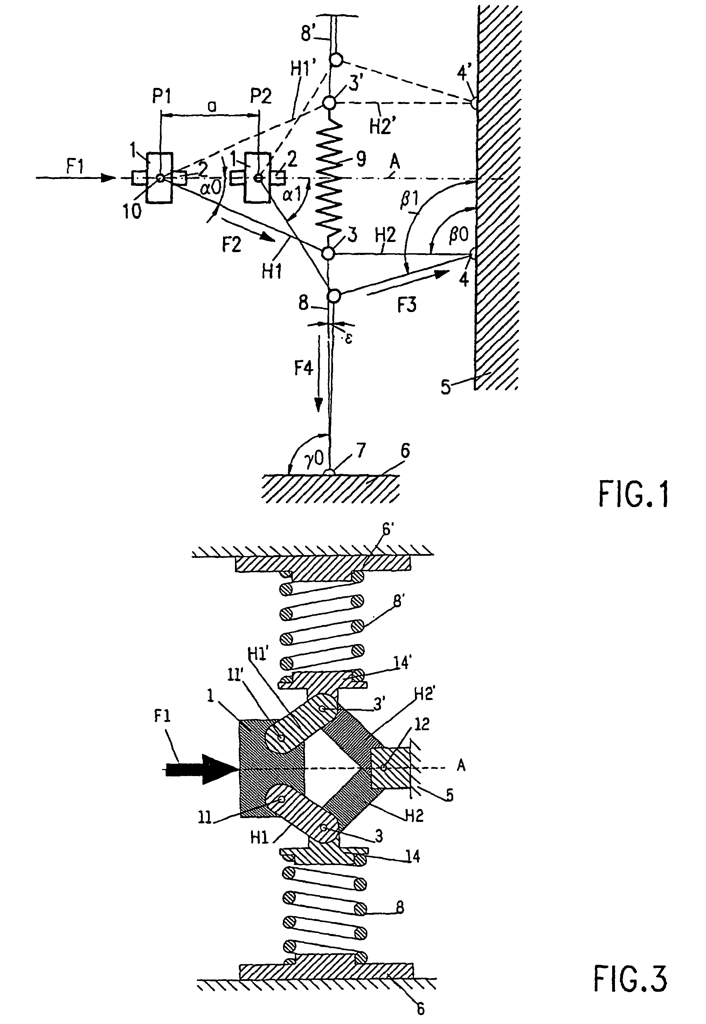

Fig. 1 zeigt schematisch ein selbständig rückstellendes, federbelastetes Sicherheitsventil mit einer Ventilabsperrvorrichtung bzw. einem Ventilschließkörper (1), welcher eine Ventilkappe oder ein Ventilkegel oder ein Ventilteller oder ein Ventildeckel zu einem nicht dargestellten Ventilkörper sein kann. Dieser Ventilschließkörper (1) ist fest mit einem Gleitlager bzw. Axialgleitlager (2) verbunden, das längs einer Ventilachse bzw. Hubachse bzw. Gleitlagerachse (A) verschiebbar ist. In einem Ventilschließkörpergelenk (10) senkrecht zur Symmetrieachse (A) ist der Ventilschließkörper (1) gelenkig mit einem 1. Schließkörperhebel (H1) verbunden, welcher über ein 1. Schubgelenk (3) einerseits mit einem 1. Lagerhebel (H2) und andererseits mit einer 1. Druckfeder (8) gelenkig verbunden ist. Der 1. Schließkörperhebel (H1) weist in einer Schließposition (P1) des Ventilschließkörpers (1) bezüglich der Symmetrieachse (A) einen spitzen Schließkörperwinkel (α0) von 35° und in dessen um einen Hub bzw. Ventilhub (a) längs der Gleitlagerachse (A) nach rechts verschobenen Öffnungsposition (P2) einen spitzen Schließkörperwinkel (α1) auf, der größer als α0 ist. Der 1. Lagerhebel (H2) ist in einem 1. Lagerhebelgelenk (4) gelenkig gelagert, welches an einem starren Ventillager bzw. an einer starren Hebelwand (5) befestigt ist. Diese Hebelwand (5) ist vertikal zur Gleitlagerachse (A) ausgerichtet. In Schließposition (P1) des Ventilschließkörpers (1) weist der 1. Lagerhebel (H2) bezüglich der Hebelwand (5) einen Hebellagerwinkel (β0) von 90° und in dessen Öffnungsposition (P2) einen größeren Hebellagerwinkel (β1) auf. Die 1. Druckfeder (8) ist in einem Federwandgelenk (7) gelenkig an einem Federlager bzw. an einer Federwand (6) befestigt, welche senkrecht zur Hebelwand (5) orientiert ist, und bildet mit dieser Federwand (6) einen Federlagerwinkel (γ0) von 90° in der Schließposition (P1) des Ventilschließkörpers (1). In der Öffnungsposition (P2) des Ventilschließkörpers (1) vergrößert sich dieser Federlagerwinkel (γ0) um einen Hubwinkel (ε).

Eine in Hubrichtung des Ventilschließköpers (1) längs der Gleitlagerachse (A) auf den Ventilschließkörper (1) einwirkende Ventilöffnungskraft (F1) überträgt über den 1. Schließkörperhebel (H1) eine Schließkörperhebelkraft (F2) auf das 1. Schubgelenk (3). Dieses überträgt einerseits über den 1. Lagerhebel (H2) eine Lagerhebelkraft (F3) auf das 1. Lagerhebelgelenk (4) und andererseits eine Federkompressionskraft (F4) auf die 1. Druckfeder (8). Diese 1. Druckfeder (8) übt durch ihre vorgegebene Vorspannung auf den Ventilschließkörper (1) eine Vorspannkraft aus. Diese Vorspannkraft wird in der Schließposition (P1) des Ventilschließkörpers (1) auf einen vorgebbaren Vorspannkraftgrenzwert (F_{G}) eingestellt.

Der 1. Schließkörperhebel (H1), das 1. Schubgelenk (3), der 1. Lagerhebel (H2) und das 1. Lagerhebelgelenk (4) können an der Gleitlagerachse (A) gespiegelt sein, wie es in Fig. 1 gestrichelt angedeutet ist. Die entsprechenden Bauelemente sind dort zusätzlich mit einem Apostroph ' gekennzeichnet.

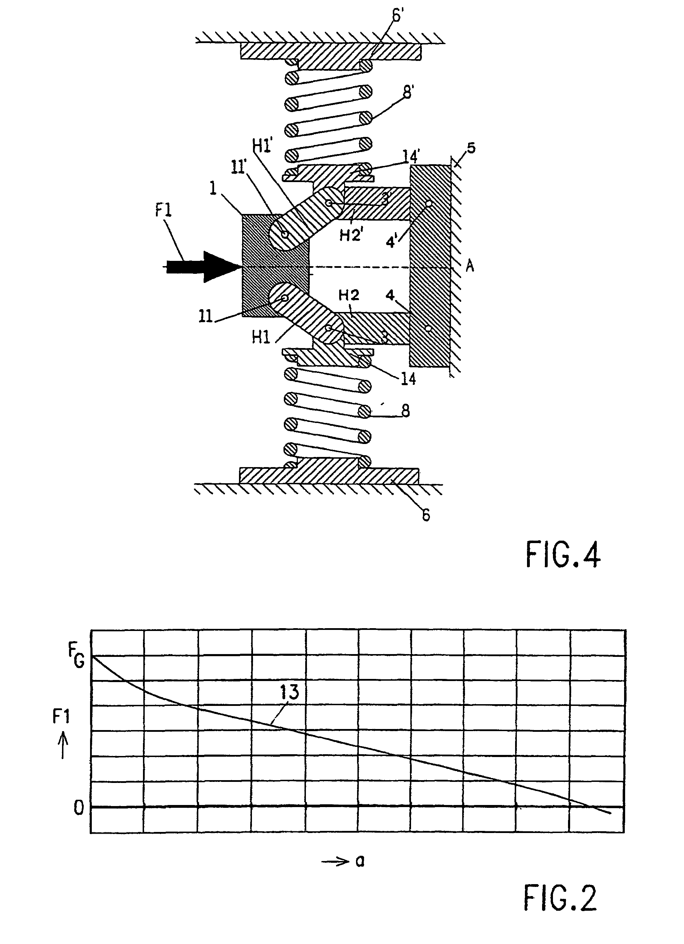

Die gespiegelte Anordnung kann auch zusätzlich zu der nicht gestrichelt dargestellten Anordnung vorgesehen sein. In diesem Fall bezeichnet das Bezugszeichen (10) ein Ventilschließkörperdoppelgelenk. Ein 2. Schließkörperhebel (H1') ist dabei über ein 2. Schubgelenk (3') einerseits über einen 2. Lagerhebel (H2') mit einem 2. Lagerhebelgelenk (4') an der Hebelwand (5) in starrer und andererseits über eine 2. Druckfeder (8') mit einer in Fig. 4 dargestellten Federwand (6') in Druckverbindung.

Anstelle oder zusätzlich zu einer nach außen wirkenden 1. und/oder 2. Druckfeder (8, 8') kann auch mindestens eine nach innen wirkende Zugfeder (9) vorgesehen sein, welche an dem 1. und/oder 2. Schubgelenk (3, 3') angreift.

Druckfedern (8, 8') mit einer linearen Federkennlinie sind in einem Sicherheitsventil in einer solchen Art mit einer Hebelanordnung (H1, H2; H1', H2') kombiniert, daß sich eine degressive Federkennlinie (13) ergibt, vgl. Fig. 2. Dort ist auf der Abszisse der Ventilhub (a) und auf der Ordinate die Ventilöffnungskraft (F1) in willkürlichen Einheiten aufgetragen. Erreicht die Ventilöffnungskraft (F1) einen vorgebbaren Vorspannkraftgrenzwert (F_{G}), so öffnet sich das Sicherheitsventil. Bei geeigneter Wahl der Hebel (H1, H2; H1', H2') bedeutet das, daß die nötige Ventilöffnungskraft auf den Ventilschließkörper (1) über den Hub (a) nicht ansteigen muß, sondern sogar eine Abnahme möglich ist. Die Hebel (H1, H2; H1', H2') und Druckfedern (8, 8') sind so zueinander kombiniert, daß je nach Ventilhub (a) erst bei stark abfallendem Druck auf den Ventilschließkörper (1) die Druckfedern (8, 8') genügend Kraft auf den Ventilschließköper (1) bringen, so daß das Sicherheitsventil wieder schließt und die ursprüngliche Vorspannkraft aufgebracht wird.

Durch eine geeignete Hebelübersetzung können alle Forderungen gleichzeitig erfüllt werden:
1. Zum Aufbringen der erforderlichen Vorspannkraft kann in der Hebelanordnung (H1, H2; H1', H2') eine schwächere Druckfeder (8, 8') eingesetzt werden, was zu einer Verminderung der Masse des bewegten Teils des Sicherheitsventils führt. Zusätzlich ist der Weg, den die bewegte Masse zurücklegen muß, reduziert.
2. Die Hebelübersetzung kann so gewählt werden, daß der Hub an der 1. bzw. 2. Druckfeder (8, 8') kleiner als der Ventilhub (a) am Ventilschließkörper (1) ist, was Druckfedern (8, 8') mit kleinerem Hub zuläßt. Das führt wieder zu einer Reduzierung der bewegten Masse.
3. Durch die Hebelübersetzung ist über den Ventilhub (a) keine Zunahme des Druckes am Ventilschließkörper (1) erforderlich.

Fig. 3 zeigt schematisch ein axialsymmetrisches, federbelastetes Sicherheitsventil in einer Querschnittsdarstellung. Die 1. und 2. Schließkörperhebel (H1, H1') sind in voneinander beabstandeten 1. bzw. 2. Ventilschließkörpergelenken (11, 11') gelenkig mit dem Ventilschließkörper (1) verbunden. Die 1. und 2. Lagerhebel (H2, H2') sind in einem an der Hebelwand (5) befestigten Lagerhebeldoppelgelenk (12) gelenkig miteinander und mit der Hebelwand (5) verbunden. Als Schraubenfedern ausgebildete 1. und 2. Druckfedern (8, 8') sind über 1. bzw. 2. Federlager (14, 14') mit 1. bzw. 2. Schubgelenken (3, 3') gelenkig verbunden, über welche auch die Hebel (H1, H2) bzw. H1', H2') gelenkig miteinander in Wirkverbindung stehen.

Fig. 4 zeigt in einer weiteren Ausführungsvariante der Erfindung ein axialsymmetrisches, federbelastetes Sicherheitsventil in einer Querschnittsdarstellung. Dabei sind die 1. und 2. Schließkörperhebel (H1, H1') in voneinander beabstandeten 1. bzw. 2. Ventilschließkörpergelenken (11, 11') gelenkig mit dem Ventilschließkörper (1) verbunden, entsprechend Fig. 3. Die 1. und 2. Lagerhebel (H2, H2') sind in 1. bzw. 2. Lagerhebelgelenken (4, 4') gelenkig mit der Hebelwand (5) verbunden, entsprechen Fig. 1.

Um eine möglichst kleine Anfangskraft (F4) auf die 1. bzw. 2. Druckfeder (8, 8') zu erreichen, sollten der Federlagerwinkel (γ0) und der Hebellagerwinkel (β0) jeweils wenigstens annähernd 90° betragen und der Schließkörperwinkel (α0) möglichst klein gewählt werden. Vorzugsweise wird der Schließkörperwinkel (α0) im Winkelbereich von 25° - 60° gewählt, bei einer Länge des 1. und 2. Schließkörperhebels (H1, H1') von 50 mm und einer Länge des 1. und 2. Lagerhebels (H2, H2') von 60 mm.

### BEZEICHNUNGSLISTE

- 1: Ventilabsperrvorrichtung, Ventilkappe, Ventilkegel, Ventilteller, Ventildeckel, Ventilschließkörper
- 2: Gleitlager von 1, Axialgleitlager
- 3, 3': Gelenk, 1. bzw. 2. Schubgelenk
- 4, 4': 1. bzw. 2. Lagerhebelgelenk
- 5: Hebelwand, starres Ventillager
- 6, 6': Federwand, starres Federlager
- 7: Federwandgelenk
- 8, 8': 1. bzw. 2. Druckfeder, Schraubenfeder
- 9: Zugfeder
- 10: Ventilschließkörpergelenk, Ventilschließkörperdoppelgelenk
- 11, 11': 1. bzw. 2. Ventilschließkörpergelenk
- 12: Lagerhebeldoppelgelenk
- 13: Öffnungskraftkennlinie, Federkennlinie
- 14, 14': Federlager

- a: Ventilhub, Hub von 1
- A: Ventilachse, Gleitlagerachse von 2, Hubachse
- F_{G}: Vorspannkraftgrenzwert
- F1: Ventilöffnungskraft, Kraft auf 1
- F2: Schließkörperhebelkraft, Kraft in H1
- F3: Lagerhebelkraft, Kraft in H2
- F4: Federkraft, Federkompressionskraft, Kraft auf 8
- H1, H1': 1. bzw. 2. Schließkörperhebel
- H2, H2': 1. bzw. 2. Lagerhebel
- P1: Schließposition von 1
- P2: Öffnungsposition von 1
- α0, α1: Schließkörperwinkel, Winkel von H1 bezüglich A ohne bzw. mit Hub von 1
- β0, β1: Hebellagerwinkel, Winkel von H2 bezüglich 5 ohne bzw. mit Hub von 1
- γ0: Federlagerwinkel, Winkel von 8 bezüglich 6 ohne Hub
- ε: Hubwinkel von 8

## Patentansprüche

1. Federbelastetes, selbst rückstellendes Sicherheitsventil
a) mit einem entlang einer Gleitlagerachse (A) beweglichen Ventilschließkörper (1),
b) welcher mindestens ein Ventilschließkörpergelenk (10, 11, 11') aufweist,
c) in welchem mindestens ein erster Schließkörperhebel (H1, H1') drehbar gelagert ist,
d) welcher der mindestens eine erste Schließkörperhebel (H1, H1') über mindestens ein weiteres Gelenk (3, 3') mit mindestens einem ersten Lagerhebel (H2, H2') drehbar verbunden ist,
e) wobei dieser mindestens eine erste Lagerhebel (H2, H2') in mindestens einem Lagerhebelgelenk (12, 4, 4') drehbar gelagert ist,
**dadurch gekennzeichnet**,
f) daß das weitere Gelenk (3, 3') ein federbelastetes, bewegliches Schubgelenk ist, wobei das Schubgelenk (3, 3') mit mindestens einer Feder (8, 8', 9) in Wirkverbindung steht, welche in einer Schließposition (P1) des Ventilschließkörpers (1) im wesentlichen eine orthogonal zur Gleitlagerachse (A) gerichtete Vorspannkraft, im Sinne einer Schließbewegung des Sicherheitsventils, auf das Schubgelenk (3, 3') ausübt.

2. Federbelastetes Sicherheitsventil nach Anspruch 1, **dadurch gekennzeichnet, daß** der mindestens eine erste Schließkörperhebel (H1, H1') in der Schließposition (P1) des Ventilschließkörpers (1) einen Schließkörperwinkel (α0) mit der Gleitlagerachse (A) in einem Winkelbereich von 25° bis 60° aufweist.

3. Federbelastetes Sicherheitsventil nach Anspruch 1 oder 2, **dadurch gekennzeichnet, daß** der mindestens eine erste Lagerhebel (H2, H2') in Schließposition (P1) des Ventilschließkörpers (1) im wesentlichen parallel zur Gleitlagerachse (A) ausgerichtet ist.

4. Federbelastetes Sicherheitsventil nach einem der vorhergehenden Ansprüche, **dadurch gekennzeichnet**,
a) daß ein erster und ein zweiter Schließkörperhebel (H1, H1') sowie
b) daß ein erster und ein zweiter Lagerhebel (H2, H2') vorgesehen sind,
c) welche spiegelbildlich bezüglich einer bzw. der Gleitlagerachse (A) des Ventilschließkörpers (1) angeordnet sind.

5. Federbelastetes Sicherheitsventil nach einem der vorhergehenden Ansprüche, **dadurch gekennzeichnet, daß** das mindestens eine Lagerhebelgelenk (12, 4, 4') an einer starren Hebelwand (5) befestigt ist, welche orthogonal bezüglich einer bzw. der Gleitlagerachse (A) des Ventilschließkörpers (1) ausgerichtet ist.

## Claims

1. Spring-loaded, self-resetting safety valve
a) having a valve-closing body (1) which is movable along a plain-bearing axis (A),
b) which has at least one valve-closing-body joint (10, 11, 11'),
c) in which at least one first closing-body lever (H1, H1') is rotatably mounted,
d) which at least one first closing-body lever (H1, H1') is rotatably connected via at least one further joint (3, 3') to a first support lever (H2, H2'),
e) this at least one first support lever (H2, H2') being rotatably mounted in at least one support-lever joint (12; 4, 4'),
**characterized in that**
f) the further joint (3, 3') is a spring-loaded movable sliding joint, the sliding joint (3, 3') being in operative connection with at least one spring (8, 8', 9), which, in a closing position (P1) of the valve-closing body (1), essentially exerts a preloading force, directed orthogonally to the plain-bearing axis (A), on the sliding joint (3, 3') for a closing movement of the safety valve.

2. Spring-loaded safety valve according to Claim 1, **characterized in that** the at least one first closing-body lever (H1, H1'), in the closing position (P1) of the valve-closing body (1), has a closing-body angle (α0) with the plain-bearing axis (A) within an angular range of 25° to 60°.

3. Spring-loaded safety valve according to Claim 1 or 2, **characterized in that** the at least one first support lever (H2, H2'), in the closing position (P1) of the valve-closing body (1), is oriented essentially parallel to the plain-bearing axis (A).

4. Spring-loaded safety valve according to one of the preceding claims, **characterized in that**
a) a first and a second closing-body lever (H1, H1') and
b) a first and a second support lever (H2, H2') are provided,
c) which are arranged in mirror image relative to a or the plain-bearing axis (A) of the valve-closing body (1).

5. Spring-loaded safety valve according to one of the preceding claims, **characterized in that** the at least one support-lever joint (12, 4, 4') is fastened to a rigid lever wall (5), which is oriented orthogonally relative to a or the plain-bearing axis (A) of the valve-closing body (1).

## Revendications

1. Soupape de sécurité actionnée par ressort revenant automatiquement,
a) avec un corps de fermeture de soupape (1) mobile le long d'un axe de palier lisse (A),
b) qui présente au moins une articulation de corps de fermeture de soupape (10, 11, 11'),
c) dans laquelle au moins un premier levier de corps de fermeture (H1, H1') est monté à rotation,
d) lequel au moins un premier levier de corps de fermeture (H1, H1') est connecté de manière rotative par le biais d'au moins une articulation supplémentaire (3, 3') à au moins un premier levier de palier (H2, H2'),
e) cet au moins un premier levier de palier (H2, H2') étant monté à rotation dans au moins une articulation (12, 4, 4') de levier de palier,
**caractérisée en ce que**
f) l'articulation supplémentaire (3, 3') est une articulation de poussée mobile actionnée par un ressort, l'articulation de poussée (3, 3') étant en liaison coopérante avec au moins un ressort (8, 8', 9) qui exerce, sur l'articulation de poussée (3, 3'), dans une position de fermeture (P1) du corps de fermeture de soupape (1) essentiellement une force de précontrainte orientée perpendiculairement à l'axe de palier lisse (A) dans le sens d'un mouvement de fermeture de la soupape de sécurité.

2. Soupape de sécurité actionnée par ressort selon la revendication 1, **caractérisée en ce que** l'au moins un premier levier de corps de fermeture (H1, H1') présente, dans la position de fermeture (P1) du corps de fermeture de soupape (1) un angle de corps de fermeture (α0) avec l'axe de palier lisse (A) dans une plage angulaire de 25° à 60°.

3. Soupape de sécurité actionnée par ressort selon la revendication 1 ou 2, **caractérisée en ce que** l'au moins un premier levier de palier (H2, H2') est orienté dans la position de fermeture (P1) du corps de fermeture de soupape (1) essentiellement parallèlement à l'axe de palier lisse (A).

4. Soupape de sécurité actionnée par ressort selon l'une quelconque des revendications précédentes, **caractérisée en ce que**
a) un premier et un deuxième levier de corps de fermeture (H1, H1') ainsi
b) qu'un premier et un deuxième levier de palier (H2, H2') sont prévus,
c) lesquels sont disposés suivant une symétrie spéculaire par rapport à un ou l'axe de palier lisse (A) du corps de fermeture de soupape (1).

5. Soupape de sécurité actionnée par ressort selon l'une quelconque des revendications précédentes, **caractérisée en ce que** l'au moins une articulation (12, 4, 4') de levier de palier est fixée sur une paroi de levier rigide (5) qui est orientée perpendiculairement par rapport à un ou l'axe de palier lisse (A) du corps de fermeture de soupape (1) .
